# EUROPEAN PATENT APPLICATION

(11) **EP 4 746 532 A1**
(43) Date of publication of application: **20.05.2026**
(21) Application number: 23945142.0
(22) Date of filing: 13.07.2023
(51) Int. Cl.: H04W 52/02, H04W 16/32, H04W 88/18

(54) **COMMUNICATION MANAGEMENT DEVICE AND COMMUNICATION SYSTEM**

(71) Applicant: 1FINITY INC., Kawasaki-shi, Kanagawa 211-8588 (JP)
(72) Inventor: YAMAMOTO Kanta, Kawasaki-shi, Kanagawa 211-8588 (JP); UEMURA Katsunari, Kawasaki-shi, Kanagawa 211-8588 (JP); CHENG Huiting, Kawasaki-shi, Kanagawa 211-8588 (JP)
(74) Representative: Haseltine Lake Kempner LLP
(86) International application number: PCT/JP2023/025817
(87) International publication number: WO 2025/013269

(57) **Abstract**

To improve efficiency of network energy saving of a radio access network. A communication management device manages communication of a radio access network including a first base station that provides a first cell and a second base station that provides a second cell including the first cell. When traffic volumes of the first and second cells become less than a predetermined threshold, the communication management device connects the terminal connected to the first base station to the second base station, and shifts an operation mode of the first base station from the normal mode to the power saving mode. The communication management device transmits, to the second base station, an instruction indicating acquisition of location information of each terminal connected to the second base station.

## Description

### TECHNICAL FIELD

The present invention relates to a communication management device, a base station device, a communication system, and a communication management method for radio communication.

### BACKGROUND ART

In a standardization organization such as 3rd Generation Partnership Project (3GPP) (registered trademark) or Open RAN (O-RAN) Alliance, there is a discussion about network energy saving (NES) of a radio access network (RAN). For example, in an O-RAN architecture in which a RAN intelligent controller (RIC) is introduced based on a 3GPP specification, it is expected to realize efficient network energy saving by collecting configuration information and statistical information regarding a RAN and user equipment (UE) via a standard interface and executing control according to a situation of the RAN.

As one of use cases for network energy saving of a radio access network, carrier and cell switch off/on control has been proposed. In the carrier/cell switch Off/On control, in a network configuration in which a plurality of cells (or carriers) cover the same service area, some cells (or carriers) can be stopped according to a communication status. Accordingly, network energy saving is realized. The function deployment of the carrier/cell switch Off/On control in the O-RAN architecture is discussed in WG1 (Working Group 1) and WG2 (Working Group 2) of the O-RAN (for example, Non-Patent Literatures 1 and 2).

### CITATION LIST

### NON-PATENT LITERATURE

Non-Patent Literature 1: O-RAN.WG1.Use-Cases-Detailed-Specification-R003-v10.00.03
Non-Patent Literature 2: O-RAN.WG2.Use-Case-Requirements-R003-v07.00
Non-Patent Literature 3: 3GPP TS32.423 V17.6.0
Non-Patent Literature 4: 3GPP TS32.422 V17.10.0

### SUMMARY OF INVENTION

### PROBLEMS TO BE SOLVED BY THE INVENTION

As described above, cell/carrier switch off/on control has been proposed as one of use cases for network energy saving of a radio access network. However, the proposed method may not be able to control network energy saving of the radio access network and load distribution of traffic with good balance.

An object of one aspect of the present invention is to improve efficiency of network energy saving of a radio access network.

### MEANS FOR SOLVING THE PROBLEMS

A communication management device according to one aspect of the present invention manages communication of a radio access network including a first base station that provides a first cell and a second base station that provides a second cell including the first cell. The communication management device includes a network energy saving processor that executes network energy saving control of the radio access network. When traffic volumes of the first and second cells become less than a predetermined threshold, the network energy saving processor connects a terminal connected to the first base station to the second base station and shifts an operation mode of the first base station from a normal mode to a network energy saving mode, transmits, to the second base station, an instruction indicating acquisition of location information of each terminal connected to the second base station and receives the location information from the second base station, and determines whether to return the operation mode of the first base station from the network energy saving mode to the normal mode based on the traffic volume of the second cell and the location information.

### ADVANTAGEOUS EFFECTS OF THE INVENTION

According to the foregoing aspect, efficiency of network energy saving of a radio access network is improved.

### BRIEF DESCRIPTION OF DRAWINGS

FIG. 1 is a diagram illustrating an example of cell/carrier switch off/on control.
FIGS. 2A and 2B are diagrams illustrating an example of a problem caused due to non-use of location information of a terminal.
FIG. 3 is a diagram illustrating an example of function deployment related to cell/carrier switch off/on control in an O-RAN architecture.
FIG. 4 is a diagram illustrating an example of a flow of information in network energy saving control according to an embodiment of the present invention.
FIG. 5 is a flowchart (part 1) illustrating an example of network energy saving control according to an embodiment of the present invention.
FIG. 6 is a flowchart (part 2) illustrating an example of the network energy saving control according to the embodiment of the present invention.
FIGS. 7A and 7B are diagrams illustrating an implementation example (part 1) of network energy saving control according to the embodiment of the present invention.
FIGS. 8A to 8C are diagrams illustrating an implementation example (part 2) of the network energy saving control according to the embodiment of the present invention.
FIG. 9 is a sequence diagram illustrating an example of a method in which a network energy saving processing unit collects location information of a terminal.
FIG. 10 is a diagram illustrating an example of a hardware configuration of an SMO that operates as a communication management device.

### DESCRIPTION OF EMBODIMENTS

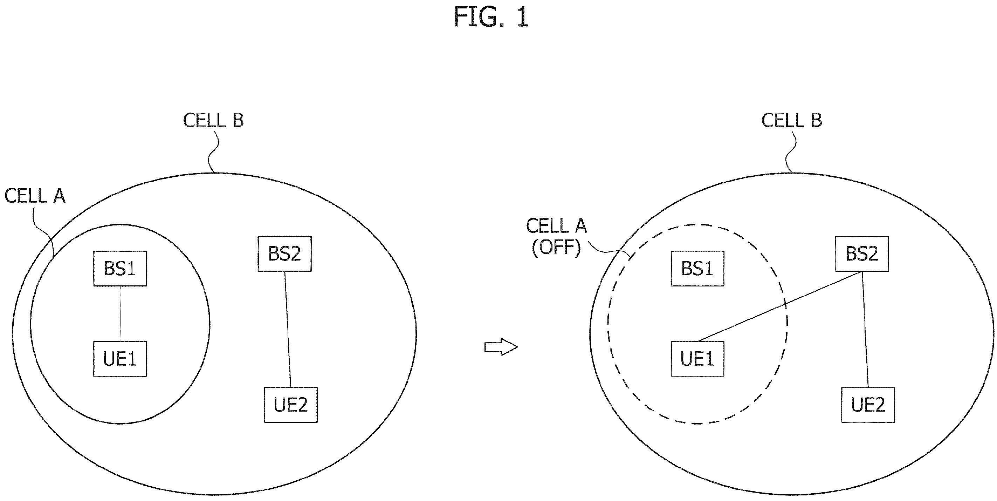

FIG. 1 illustrates an example of cell/carrier switch off/on control. In this implementation example, a base station BS1 provides a cell A and a base station BS2 provides a cell B. A cell represents a communicable area provided by a base station. The cell B is larger than the cell A. The cell A is included in the cell B. That is, a terminal located in the cell A can communicate with both the base stations BS1 and BS2. The base stations BS1 and BS2 are, for example, a next generation NodeB (gNB) or a new radio (NR) base station.

Terminals UE1 and UE2 are located in the cell B. The terminal UE1 is further located in the cell A. Accordingly, the terminal UE1 is connected to the base station BS1. On the other hand, the terminal UE2 is located outside of the cell A. Accordingly, the terminal UE2 is connected to the base station BS2. Here, a communication management device (not illustrated) manages communication between the cells A and B. The communication management device has a function of saving power of the network.

The communication management device monitors traffic of each cell. For example, when the base station BS2 can process the traffic of the terminals UE1 and UE2, the communication management device disconnects a link between the terminal UE1 and base station BS1, and sets up a link between the terminal UE1 and the base station BS2. At this time, the communication management device executes the following preprocessing.
(1) checking an emergency call and a warning message in the cell A
(2) executing handover of the terminal UE1 from the cell A to the cell B.
(3) releasing carrier aggregation or dual connectivity when carrier aggregation or dual connectivity including the cell A is in progress.

Thereafter, the communication management device controls the cell A to be turned off. For example, the communication management device stops output of the base station BS1. When the base station BS1 uses a plurality of carriers, the base station BS1 can stop some carriers.

In this way, according to the cell/carrier switch off/on control, when traffic of a radio access network is small, the cell A can be stopped while maintaining the communication between the terminal UE1 and the terminal UE2. Accordingly, network energy saving of the radio access network is realized.

As described above, in the cell/carrier switch off/on control, the communication management device monitors the traffic of each cell. In addition, the communication management device monitors a radio wave condition and the like of each cell. However, in the proposed cell/carrier switch off/on control, location information of each terminal UE is not used. Therefore, in the proposed method, efficiency of network energy saving may deteriorate.

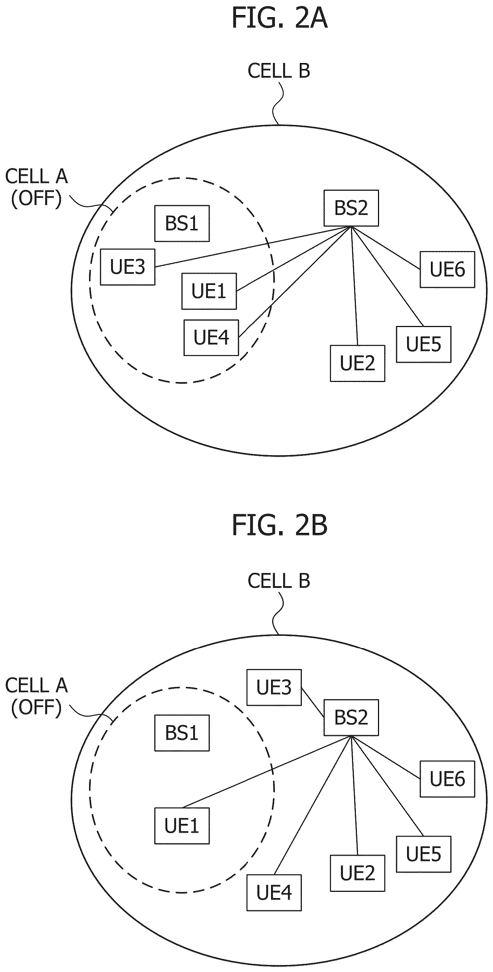

FIG. 2 illustrates an example of a problem caused due to non-use of the location information of the terminal UE. In this example, as described with reference to FIG. 1, the cell A is controlled to an OFF state. The terminals UE1 and UE2 are connected to the base station BS2.

Thereafter, it is assumed that traffic in the cell B increases. Specifically, the terminals UE3 to UE6 located in the cell B start communication. It is assumed that a communication management device determines that communication performance may degrade due to an increase in traffic in the cell B. In this case, the communication management device executes an offload process (alternatively, load balance processing) of distributing the traffic in the cell B to the base stations BS1 and BS2 by returning the cell A to an ON state.

In the case illustrated in FIG. 2(A), of the terminals UE1 to UE6 located in the cell B, the terminals UE1, UE3, and UE4 are located in the cell A. In this case, when the cell A is controlled to the ON state, the terminals UE1, UE3, and UE4 can be connected to the base station BS1. Then, since traffic in the cell B is distributed to the base stations BS1 and BS2, communication performance can be maintained.

On the other hand, in the case illustrated in FIG. 2(B), of the terminals UE1 to UE6 located in the cell B, only the terminal UE1 is located in the cell A. In this case, even if the cell A is controlled to the ON state, the terminals UE2 to UE6 continue communication with the base station BS2. That is, even if the cell A is controlled to the ON state, the load distribution effect in the cell B is low. In other words, although the load distribution effect is low, power consumption increases in the control of the cell A to the ON state. Accordingly, in this case, the efficiency of the power saving effect is poor.

A communication management device according to an embodiment of the present invention collects location information of each terminal UE in cell/carrier switch off/on control. The communication management device executes the cell/carrier switch off/on control not only based on traffic in the cell but also based on location information of each terminal UE.

### <Embodiment>

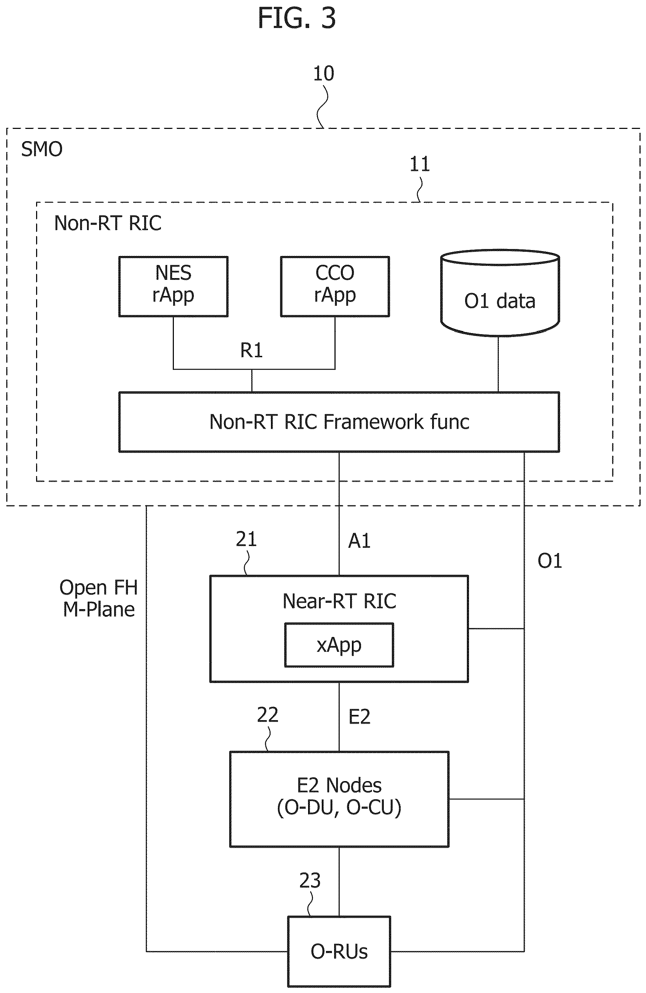

FIG. 3 illustrates an example of function deployment related to cell/carrier switch off/on control in an O-RAN architecture. In the example illustrated in FIG. 3, a communication system related to the cell/carrier switch off/on control includes a service management orchestration (SMO) 10, an E2 node 22, and an O-RAN radio unit (O-RU) 23.

The SMO 10 is an example of a communication management device and manages each device or each function in the O-RAN architecture. The SMO 10 is connected to the E2 node 22 and the O-RU 23 via an O1 interface. The SMO 10 is connected to the O-RU 23 via an open fronthaul interface. The SMO 10 may collect configuration information and statistical information of the radio access network via the O1 interface or the open fronthaul interface. The SMO 10 can transmit an instruction to change the configuration of the E2 node 22 via the O1 interface. Further, the SMO 10 can control an operation of the O-RU 23 via the open fronthaul interface.

The O-RAN architecture includes a RAN intelligent controller (RIC). The RIC provides services for each device or each function in the O-RAN architecture. However, the RIC includes a non-real time RIC 11 and a real time (near-real) time RIC 21. The non-real time RIC 11 is mounted inside the SMO 10 and the real time RIC 21 is provided outside of the SMO 10. The non-real time RIC 11 and the real time RIC 21 are connected by an A1 interface. The A1 interface includes A1-P and A1-EI.

The non-real time RIC 11 includes a non-real time RIC framework. A control application related to the cell/carrier switch off/on control operates on the non-real time RIC framework. In this example, a network energy saving (NES) application and a coverage and capacity optimization (CCO) application are mounted. The application program operating in the non-real time RIC 11 may be referred to as "rApp".

The NES application acquires configuration information and statistical information of a radio access network collected by the SMO 10, and gives the information to an artificial intelligence (AI)/machine learning (ML) model to execute a learning process. The NES application updates the AI/ML model. Further, the NES application estimates optimum configuration information of the E2 node by using the AI/ML model. The CCO application manages coverage information of each cell.

In this way, the non-real time RIC 11 collects various types of data accumulated in the E2 node 22 via the O1 interface. The non-real time RIC 11 determines an optimum setting parameter according to the wireless environment and a traffic volume, and gives the setting parameter to the E2 node via the O1 interface by using AI/ML. Further, the non-real time RIC 11 generates a policy related to control of the radio access network and notifies the real time RIC 21 of the policy via the A1 interface. For example, the real time RIC 21 is notified of a policy "Executing network energy saving to 50% of peak power" via the A1-P interface. Alternatively, the real time RIC 21 is notified of information indicating geographical overlap of a coverage of each cell via the A1-EI interface.

The real time RIC 21 collects configuration information and statistical information of a radio access network from the E2 node 22 via the E2 interface and analyzes the configuration information and the statistical information. The real time RIC 21 controls the E2 node according to the policy of which the non-real time RIC 11 notifies. The preprocessing (1) to (3) described above may be started by the real time RIC 21 in response to an instruction from the non-real time RIC 11. The application program operating in the real time RIC 21 may be referred to as "xApp".

The E2 node 22 includes an O-RAN central unit (O-CU) and an O-RAN distributed unit (O-DU). The E2 node 22 provides radio link control, media access control, a PHY-High function, and the like and processes signals of the O-RU 23 in an upper layer. A plurality of O-RUs 23 can be connected to the O-DU. The configuration information and the statistical information of the radio access network are obtained and provided to the real time RIC 21. The preprocessing (1) to (3) described above is executed by the E2 node 22. The E2 node 22 can be described as, for example, a communication control device.

The O-RU 23 includes a radio circuit and can accommodate a plurality of terminals UE. The O-RU 23 transmits a report related to network energy saving of the radio access network to the SMO 10 via an M plane of the O1 interface or the open fronthaul interface. Further, the O-RU 23 executes on/off control of the cell or carrier according to the NES instruction received from the SMO 10 via the M plane of the O1 interface or the open fronthaul interface. Note that the O-RU 23 can be described as, for example, a communication device.

The O1 interface provides an operation administration maintenance (OAM) function from the SMO 10 to the real time RIC 21 and the E2 node 22. The A1 interface connects the non-real time RIC 11 to the real time RIC 21. The E2 interface connects the real time RIC 21 to the E2 node 22. The R1 interface connects the non-real time RIC framework to the rApp.

In the O-RAN architecture that has the above configuration, the SMO 10 operating as the communication management device executes network energy saving (that is, the NES) of the network while monitoring the traffic of each cell. At this time, the SMO 10 executes network power saving not only based on traffic of each cell but also based on location information of each terminal UE.

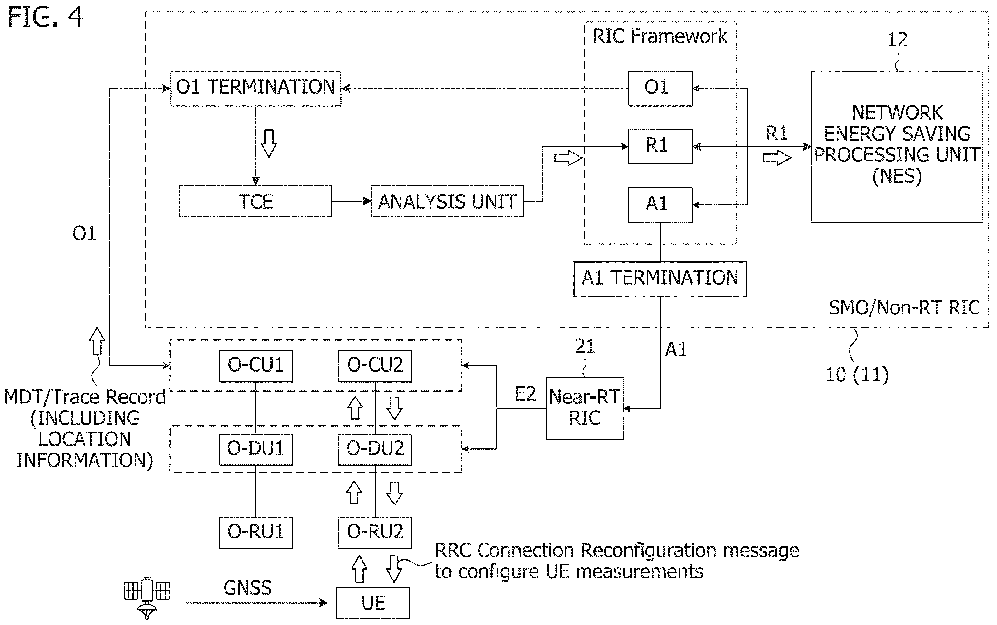

FIG. 4 illustrates an example of a flow of information in the network energy saving control according to the embodiment of the present invention. In FIG. 4, the O-CU1 and the O-CU2 are included in an O-CU. The O-CU may be realized by one information processing device or may be realized by a plurality of physically independent information processing devices. Similarly, the O-DU1 and the O-DU2 are included in an O-DU. The O-DU may be realized by one information processing device or may be realized by a plurality of physically independent information processing devices. The O-CU and the O-DU correspond to the E2 node 22 illustrated in FIG. 3. The O-RU1 and the O-RU2 may each accommodate the terminal UE.

The O-CU1, the O-DU1, and the O-RU1 are included in a base station BS1 that provides the cell A illustrated in FIG. 1. The O-CU2, the O-DU2, and the O-RU2 are included in a base station BS2 that provides the cell B illustrated in FIG. 1.

The SMO 10 (alternatively, the non-real time RIC 11) includes a network energy saving processing unit 12. The network energy saving processing unit 12 is realized by the NES application and the CCO application illustrated in FIG. 3.

The SMO 10 collects the configuration information and the statistical information of the radio access network from the O-CU through the O1 interface constantly or periodically. For example, the SMO 10 collects information indicating a radio wave status of each terminal UE (reference signal received power (RSRP), reference signal received quality (RSRQ), and the like), information indicating a traffic volume of each terminal UE, information indicating a throughput of each terminal UE, and the like. Then, the network energy saving processing unit 12 determines whether to shift an operation mode of the base station BS1 from the normal mode to the network energy saving mode based on the information collected by the SMO 10. In the normal mode, the base station can communicate with each terminal UE located in the cell. In the network power saving mode, in this implementation example, the base station stops some or all of the available carriers. That is, the cell or the carrier is controlled to the OFF state. This operation is realized by the O-RU. That is, the SMO 10 controls the operation mode of the base station by providing an instruction or a command to the O-RU via the O1 interface. For example, when a total traffic volume of the cell A and the cell B becomes less than a predetermined threshold, the SMO 10 connects the terminal UE connected to the base station BS1 to the base station BS2 and shifts the operation mode of the base station BS1 from the normal mode to the power saving mode.

After the base station BS1 is shifted to the network energy saving mode, the network energy saving processing unit 12 notifies the O-CU (that is, the O-CU2) of the base station BS2 of the setting related to the UE measurement information such that each terminal UE located in the cell B executes minimization of drive test (MDT)/trace record notification. This notification is transmitted via the O1 interface.

The O-CU2 notifies each terminal UE located in the cell B of an MDT/Trace record to be reported. This notification is realized by, for example, an RRC connection reconfiguration message. Then, each terminal UE transmits an MDT/Trace record to the O-CU2 according to the notification from the O-CU2. The MDT/Trace record includes UE measurement information and UE location information specified by the network energy saving processing unit 12.

The MDT/Trace record is set, for example, in accordance with chapter 4.34.1 (Trace Record for Immediate MDT measurements) and chapter 4.34.2 (Trace Record for UE location information) of Non-Patent Literature 3. Specifically, RSRP information and RSRQ information are reported as UE measurement information from each terminal UE to the O-CU2 by the M1 MDT measurement. By UE location MDT measurement, Global Navigation Satellite System (GNSS) pos information is reported from each terminal UE to the O-CU2 as UE location information.

The MDT/Trace records transmitted from each terminal UE are communicated to the SMO 10 via O-CU2 and O1 interfaces. Then, the MDT/Trace record is collected by a trace collection entity (TCE) in the SMO 10. Subsequently, the MDT/Trace record is analyzed in the analysis unit and processed in a predetermined format as necessary. Thereafter, the MDT/Trace record is transmitted to the network energy saving processing unit 12 via the non-real time RIC framework.

As described above, when the base station BS1 is controlled to the network energy saving mode (that is, when the cell A is controlled to the OFF state), the network energy saving processing unit 12 acquires location information of each terminal UE located in the cell B. Here, each terminal UE periodically notifies the SMO 10 of location information indicating its own location by using the MDT/Trace record. Accordingly, the network energy saving processing unit 12 can accurately estimate a position and a movement trajectory of each terminal UE located in the cell B. Then, the network energy saving processing unit 12 determines whether to return the cell A from the network energy saving mode to the normal mode using the position and movement trajectory of each terminal UE located in the cell B.

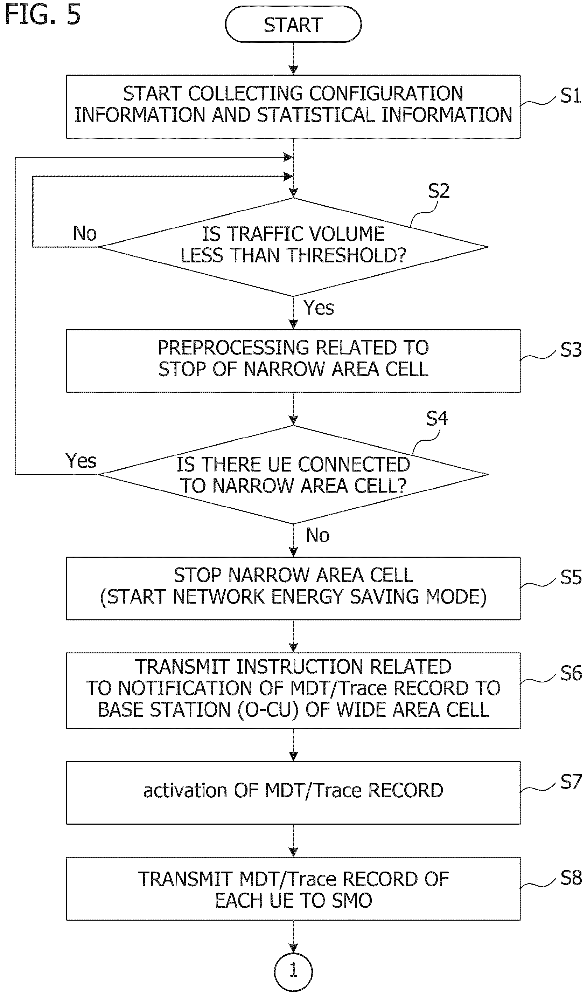

FIGS. 5 to 6 are flowcharts illustrating an example of network energy saving control according to the embodiment of the present invention. Here, it is assumed that a plurality of cells are formed in the same area. For example, in the example illustrated in FIG. 1, two cells (cell A and cell B) are formed. The cell A is included in the cell B. That is, the cell B covers the entire cell A. In the following description, a cell (the cell A in FIG. 1) included by another cell may be referred to as a "narrow area cell". Another cell (the cell B in FIG. 1) including a narrow area cell may be referred to as a "wide area cell". At the start of this flowchart, it is assumed that both the narrow area cell and the wide area cell are in the ON state.

In S1, the SMO 10 starts collecting the configuration information and the statistical information of the radio access network. For example, the SMO 10 collects, from the O-CU via the O1 interface, information (such as RSRP and RSRQ) indicating a radio wave status of each terminal UE, information indicating a traffic volume of each terminal UE, information indicating a throughput of each terminal UE, and the like. Thereafter, the SMO 10 collects the configuration information and the statistical information continuously or periodically.

In S2, the network energy saving processing unit 12 compares a total traffic volume of the narrow area cell and the wide area cell with a predetermined threshold using the configuration information and the statistical information collected by the SMO 10. This threshold represents, for example, a traffic volume that can be sufficiently processed only by the base station of the wide area cell. Then, when the total traffic volume is less than the threshold, the network energy saving processing unit 12 determines that the narrow area cell can be stopped. In this case, the process of the SMO 10 proceeds to S3.

In S3, the SMO 10 starts preprocessing to stop the narrow area cell. The preprocessing includes the following processes:
(1) Checking an emergency call and a warning message in the narrow area cell;
(2) Executing handover from the narrow area cell to the wide area cell on each terminal UE connected to the narrow area cell; and
(3) Releasing carrier aggregation or dual connectivity when the carrier aggregation or the dual connectivity including the narrow area cell is in progress.

The preprocessing for stopping the narrow area cell is started by the real time RIC 21 in response to an instruction from the SMO 10 and is executed by, for example, the E2 node 22 (for example, the O-CU).

In S4, the SMO 10 determines whether there is a terminal UE connected to the narrow area cell. When there is the terminal UE connected to the narrow area cell, the process of the SMO 10 returns to S2 after a predetermined time (for example, several seconds) has elapsed. Thereafter, when the traffic volume is less than the above-described threshold and there is no terminal UE connected to the narrow area cell, the process of the SMO 10 proceeds to S5.

In S5, the network energy saving processing unit 12 transmits a cell stop instruction to the O-RU in the base station of the narrow area cell. The cell stop instruction is transmitted from the SMO 10 to the corresponding O-RU via the O1 interface. Alternatively, the cell stop instruction may be transmitted from the SMO 10 to the corresponding E2 node via the O1 interface and is further transmitted from the E2 node to the O-RU via the fronthaul interface. The O-RU sets the narrow area cell to the OFF state in response to the cell stop instruction. At this time, the O-RU may stop the radio circuit. Accordingly, the operation mode of the base station of the narrow area cell shifts from the normal mode to the power saving mode.

In S6, the network energy saving processing unit 12 transmits an instruction related to notification of the UE measurement information and the UE location information to the O-CU in the base station of the wide area cell. The instruction represents that each terminal UE located in the wide area cell implements notification of an MDT/Trace record. That is, the instruction includes information for causing each terminal UE located in the wide area cell to report UE measurement information (RSRP, RSRQ, or the like) and UE location information (for example, GNSS information). This instruction is transmitted from the SMO 10 to the O-CU in the base station of the wide area cell via the O1 interface.

In S7, the O-CU in the base station of the wide area cell executes activation of the MDT/Trace record for each terminal UE located in the wide area cell in response to the instruction received from the SMO 10. At this time, the RRC connection reconfiguration message is transmitted from the O-CU to each terminal UE. The RRC message includes information indicating an MDT/Trace record to be reported by each terminal UE. The activation of the MDT/Trace record is executed on the terminal UE that allows the management based MDT in the user consent in the UE context held by the O-CU in this implementation example. That is, the MDT/Trace record is activated on only the terminal UE permitted to provide the location information. The activation of the MDT/Trace record is described in, for example, Chapter 4.1.1.9.3 of Non-Patent Literature 4.

Each terminal UE periodically transmits a designated MDT/Trace record subsequently when the above-described activation is executed. The MDT/Trace record includes UE measurement information (RSRP, RSRQ, or the like) and the UE location information (for example, GNSS information) of the terminal UE.

In S8, the MDT/Trace record transmitted from each terminal UE is transmitted to the SMO 10 via the O-CU and the O1 interface in the base station of the wide area cell. In the SMO 10, the MDT/Trace record is transmitted to the network energy saving processing unit 12 via the TCE illustrated in FIG. 4. As described above, when the narrow area cell is controlled to the OFF state, the network energy saving processing unit 12 continuously acquires the location information of each terminal UE located in the wide area cell via the base station of the wide area cell.

In S11, the network energy saving processing unit 12 compares the traffic volume in the wide area cell with a predetermined threshold. This threshold represents, for example, a traffic volume in which communication performance may be degraded by only the base station of the wide area cell. Then, when the traffic volume in the wide area cell exceeds the threshold, the process of the SMO 10 proceeds to S12.

In S12, the network energy saving processing unit 12 determines whether a condition for reactivating the narrow area cell in the OFF state is satisfied. This condition is expressed by, for example, the number of terminals UE located in the narrow area cell. In this case, when the number of terminals UE located in the narrow area cell is greater than a predetermined number, it is determined that the narrow area cell may be reactivated. Alternatively, the condition for reactivating the narrow area cell is expressed by the total traffic volume of the terminal UE located in the narrow area cell. In this case, when the total traffic volume of the terminal UE located in the narrow area cell is greater than the predetermined volume, it is determined that the narrow area cell may be reactivated. In any case, the network energy saving processing unit 12 determines whether to reactivate the narrow area cell using the location information of each terminal UE located in the wide area cell. Then, when the narrow area cell is reactivated, the processes of S13 to S15 are executed.

In S13, the network energy saving processing unit 12 instructs the O-RU in the base station of the narrow area cell to return the operation mode from the network energy saving mode to the normal mode. Accordingly, the narrow area cell is reactivated. That is, the narrow area cell is controlled to the ON state. This instruction is transmitted from the SMO 10 to the O-RU in the base station of the narrow area cell via the O1 interface. Alternatively, the instruction may be transmitted from the SMO 10 to the corresponding E2 node via the O1 interface and further transmitted from the E2 node to the O-RU via the fronthaul interface.

In S14, the network energy saving processing unit 12 releases the MDT/Trace record setting mounted in the O-CU in the base station of the wide area cell. This release instruction is transmitted from the SMO 10 to the O-CU in the base station of the wide area cell via the O1 interface.

In S15, the O-CU in the base station of the wide area cell executes deactivation of the MDT/Trace record for each terminal UE located in the wide area cell in response to the release instruction received from the SMO 10. The deactivation of the MDT/Trace record is described in, for example, Chapter 4.1.3.11 of Non-Patent Literature 4.

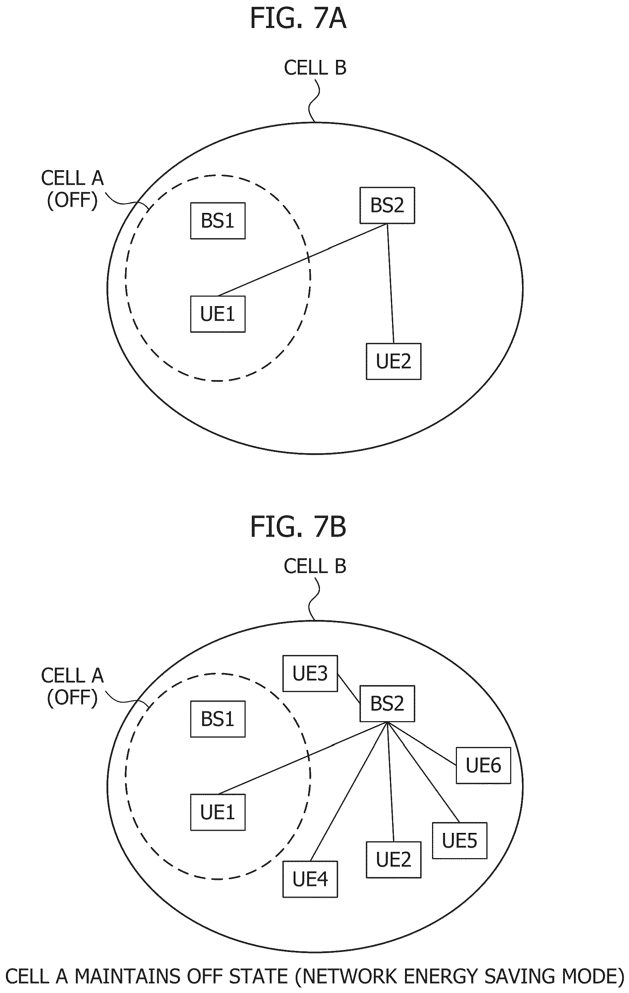

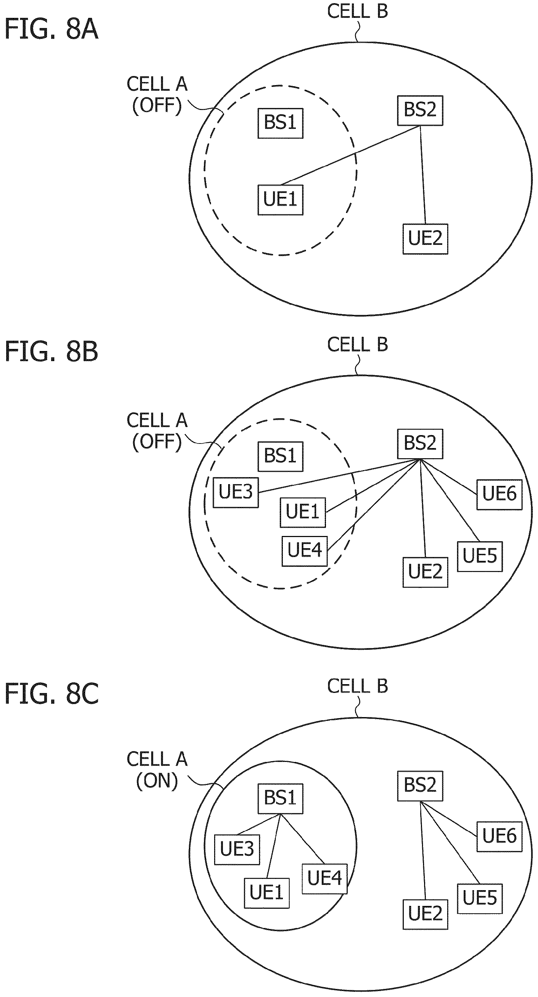

FIGS. 7 and 8 illustrate an implementation example of network energy saving processing according to the embodiment of the present invention. In this implementation example, similarly to FIG. 1 and FIG. 2, the base station BS1 provides the cell A, and the base station BS2 provides the cell B. The cell A is included in the cell B. That is, the terminal UE located in the cell A can communicate with both the base stations BS1 and BS2.

Terminals UE1 and UE2 are located in the cell B. The terminal UE1 is also located in the cell A. However, the total traffic volume of terminals UE1 and UE2 is sufficiently small relative to a capacity of base station BS2. Therefore, as described with reference to FIG. 1, the cell A is controlled to the OFF state. As a result, as illustrated in FIG. 7(A) or 8(A), both the terminals UE1 and UE2 are connected to the base station BS2. This procedure corresponds to S2 to S5 illustrated in FIG. 5.

When the cell A is controlled to the OFF state (that is, when the operation mode of the base station BS1 shifts from the normal mode to the power saving mode), a procedure of S6 to S8 illustrated in FIG. 5 is executed. The SMO 10 sets an MDT/Trace record to be reported by each terminal UE in the O-CU of the base station BS2. The MDT/Trace record that each terminal UE is scheduled to report includes location information (for example, GNSS information) indicating a location of each terminal UE. The O-CU of the base station BS2 executes activation of the MDT/Trace record on each terminal UE located in the cell B. Accordingly, each terminal UE periodically transmits the UE measurement information and the UE location information to the O-CU of the base station BS2. The information is transmitted to the SMO 10 via the O1 interface. Accordingly, the network energy saving processing unit 12 can accurately detect or estimate the position of each terminal UE.

Thereafter, as illustrated in FIG. 7(B) or FIG. 8(B), the terminals UE3 to UE6 located in the cell B start communication. Here, when the cell A is controlled to the OFF state, the base station BS2 activates the MDT/Trace record on each terminal UE located in the cell B. Then, not only the terminals UE1 and UE2 but also the terminals UE3 to UE6 report the MDT/Trace record to the base station BS2. Accordingly, the network energy saving processing unit 12 can detect or estimate the positions of the terminals UE1 to UE6.

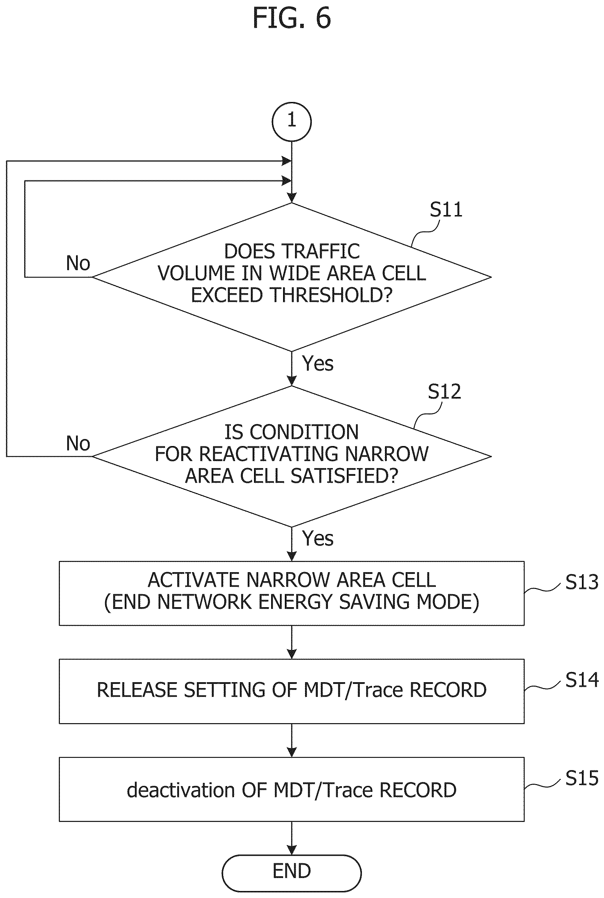

It is assumed that the traffic in the cell B increases as the terminals UE3 to UE6 located in the cell B start communication, and the traffic volume exceeds the threshold in S11 illustrated in FIG. 6. Then, the network energy saving processing unit 12 executes the determination of S12 illustrated in FIG. 6 using the location information of the terminals UE1 to UE6.

In the case illustrated in FIG. 7, of the terminals UE1 to UE6 located in the cell B, only the terminal UE1 is located in the cell A. That is, the number of terminals UE located in the narrow area cell in the OFF state is one. Here, it is assumed that the threshold used in the determination of S12 illustrated in FIG. 6 is 2. In this case, since the number of terminals UE located in the narrow area cell in the OFF state is less than the threshold, the network energy saving processing unit 12 determines that the condition for reactivating the narrow area cell is not satisfied. At this time, the network energy saving processing unit 12 estimates that the offload effect of the cell B is small even if the cell A is returned to the ON state. Therefore, as illustrated in FIG. 7(B), the network energy saving processing unit 12 maintains the cell A in the OFF state (network energy saving mode). That is, the terminals UE1 to UE6 continue the communication with the base station BS2.

In the case illustrated in FIG. 8, of terminals UE1 to UE6 located in the cell B, the terminals UE1, UE3, and UE4 are located in the cell A. That is, the number of terminals UE located in the narrow area cell in the OFF state is three. In this case, since the number of terminals UE located in the narrow area cell in the OFF state is greater than the threshold, the network energy saving processing unit 12 determines that the condition for reactivating the narrow area cell is satisfied. At this time, the network energy saving processing unit 12 estimates that the offload effect of the cell B is large when the cell A is returned to the ON state. Accordingly, as illustrated in FIG. 8(C), the network energy saving processing unit 12 returns the cell A to the ON state (normal mode). As a result, traffic of the terminals UE1, UE3, and UE4 is processed by the base station BS1, and thus performance of the base station BS2 does not degrade.

In the case illustrated in FIG. 8, thereafter, a procedure of S14 and S15 illustrated in FIG. 6 is executed. That is, the network energy saving processing unit 12 releases the setting of the MDT/Trace record set in the base station BS2. The base station BS2 deactivates the MDT/Trace record on each terminal UE located in the cell B.

As described above, according to the embodiment of the present invention, when the narrow area cell is controlled to the OFF state, the SMO 10 operating as a communication management device can accurately detect or estimate a position of each terminal UE located in the wide area cell including the narrow area cell. Accordingly, it can be appropriately determined whether to return the narrow area cell to the on-state in consideration of the offload effect when the traffic volume increases. For example, in the case illustrated in FIG. 7, even when the cell A is returned to the ON state, the offload effect of the cell B is estimated to be small, and thus the cell A is maintained in the OFF state. Accordingly, wasteful power consumption in the cell A is reduced. Conversely, in the case illustrated in FIG. 8, when the cell A is returned to the ON state, the offload effect of the cell B is estimated to be large, and thus the cell A is controlled from the OFF state to the ON state. Accordingly, communication performance of the cells A and B is maintained.

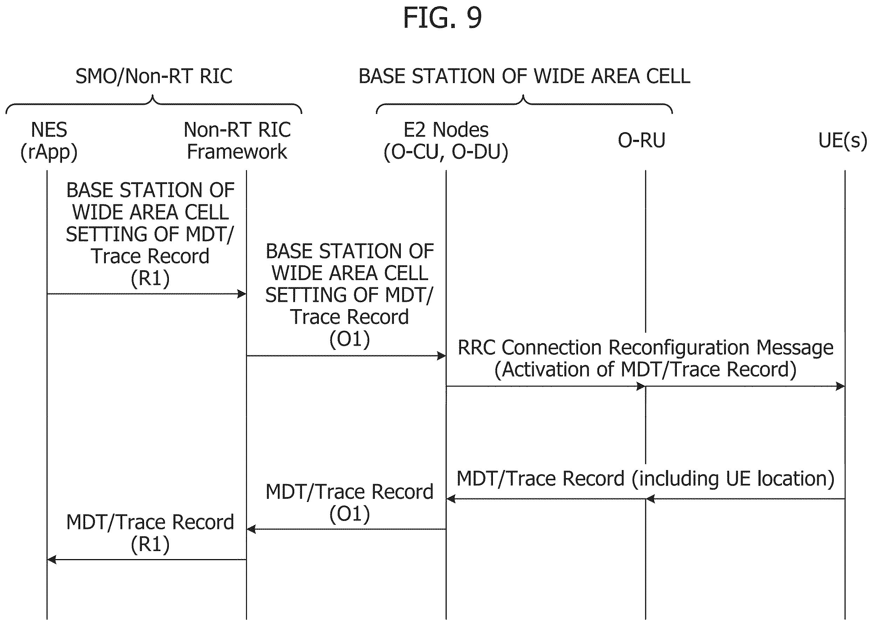

FIG. 9 is a sequence diagram illustrating an example of a method in which the network energy saving processing unit 12 collects the location information of the terminal UE. Note that it is assumed that the narrow area cell is controlled to the OFF state before this sequence is started.

The network energy saving processing unit (NES) 12 generates an instruction related to the setting of the MDT/Trace record and transmits the instruction to the non-real time RIC framework via the R1 interface. The non-real time RIC framework transmits an instruction related to the configuration of the MDT/Trace record to the base station of the wide area cell. Specifically, an instruction related to the configuration of the MDT/Trace record is transmitted to the E2 node 22 via the O1 interface. Here, the E2 node 22 includes an O-CU and an O-DU. Then, the O-CU transmits the RRC connection reconfiguration message to each terminal UE in response to the instruction from the network energy saving processing unit 12. Accordingly, activation of the MDT/Trace record of each terminal UE is executed. At this time, as the information to be reported by the terminal UE, location information indicating the position of the terminal UE is designated in addition to the information indicating the radio wave conditions (RSRP, RSRQ, or the like).

The terminal UE transmits the MDT/Trace record to the base station of the wide area cell. That is, the MDT/Trace record of the terminal UE is transmitted to the O-CU. The MDT/Trace record includes location information of the terminal UE in addition to the information (RSRP, RSRQ, or the like) indicating a radio wave status of the terminal UE. The O-CU transmits this MDT/Trace record to the non-real time RIC framework via the O1 interface. The non-real time RIC framework transmits the MDT/Trace record to the network energy saving processing unit 12. At this time, the non-real time RIC framework may optionally analyze and process the MDT/Trace record. In this way, the network energy saving processing unit 12 can collect the location information of each terminal UE.

### <Hardware Configuration>

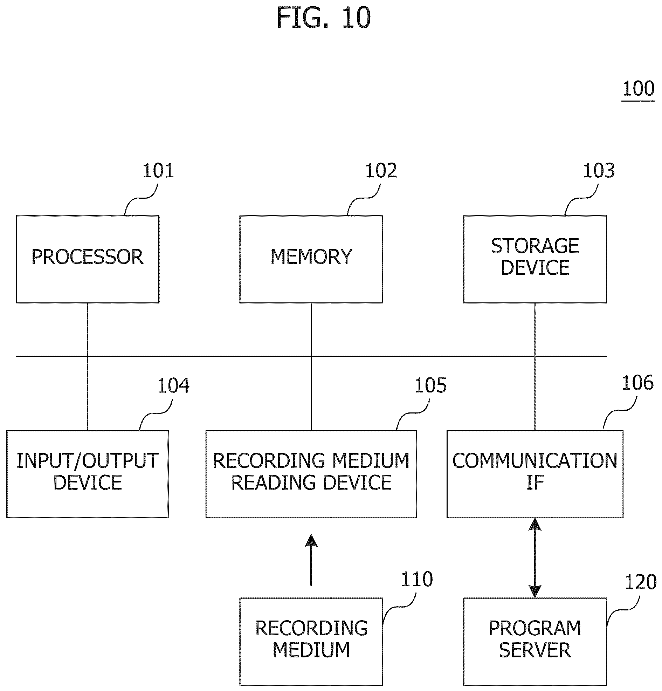

FIG. 10 illustrates an example of a hardware configuration of the SMO 10 that operates as a communication management device. The communication management device is realized by a computer 100 including a processor 101, a memory 102, a storage device 103, an input/output device 104, a recording medium reading device 105, and a communication interface 106.

The processor 101 controls the operation of the SMO 10 by executing a communication management program stored in the storage device 103. Here, the communication management program includes various rApps illustrated in FIG. 3. That is, the communication management program includes an NES and a CCO. Accordingly, the processor 101 provides a function of the network energy saving processing unit 12 by executing this communication management program. The memory 102 is used as a work area of the processor 101. The storage device 103 stores the above-described communication management program and other programs.

The input/output device 104 may include an input device such as a keyboard, a mouse, a touch panel, or a microphone. The input/output device 104 may include an output device such as a display device or a speaker. The recording medium reading device 105 may acquire data and information recorded in the recording medium 110. The recording medium 110 is a removable recording medium detachable from the computer 100. The recording medium 110 is realized by, for example, a semiconductor memory, a medium that records a signal through an optical action, or a medium that records a signal through a magnetic action. The communication management program may be provided from the recording medium 110 to the computer 100. The communication interface 106 provides a function of connecting to a network. When the communication management program is stored in the program server 120, the computer 100 may acquire the server program from the program server 120.

### REFERENCE SIGNS LIST

10 SMO (Service Management Orchestration)
11 Non-real time RIC (Non Real Time RIC)
12 Network energy saving processing unit
21 Real time RIC(Near Real Time RIC)
22 E2 Node
23 O-RU(O-RAN Radio Unit)

## Claims

1. A communication management device that manages communication of a radio access network including a first base station that provides a first cell and a second base station that provides a second cell that includes the first cell, the communication management device comprising:
a network energy saving processor configured to execute network energy saving control of the radio access network,
wherein the network energy saving processor
connects a terminal connected to the first base station to the second base station and shifts an operation mode of the first base station from a normal mode to a network energy saving mode when traffic volumes of the first cell and the second cell become less than a predetermined threshold,
transmits, to the second base station, an instruction indicating acquisition of location information of each terminal connected to the second base station and receives the location information from the second base station, and
determines whether to return the operation mode of the first base station from the network energy saving mode to the normal mode based on the traffic volume of the second cell and the location information.

2. The communication management device according to claim 1,
wherein the network energy saving processor detects the number of terminals located in the first cell based on the location information, and
wherein, when the traffic volume of the second cell is greater than a second threshold and the number of terminals located in the first cell is greater than a third threshold, the network energy saving processor returns the operation mode of the first base station from the network energy saving mode to the normal mode and connects the terminals located in the first cell to the first base station.

3. The communication management device according to claim 1,
wherein the network energy saving processor detects a terminal located in the first cell based on the location information, and
wherein, when the traffic volume of the second cell is greater than a second threshold and the traffic volume of the terminal located in the first cell is greater than a fourth threshold, the network energy saving processor returns the operation mode of the first base station from the network energy saving mode to the normal mode and connects the terminal located in the first cell to the first base station.

4. A base station device that provides a second cell in a radio access network including a first cell and the second cell that includes the first cell, the base station device comprising:
a receiver configured to receive an instruction indicating acquisition of location information of each terminal connected to the base station device from a communication management device when the first cell is controlled to an OFF state by the communication management device that executes network energy saving control of the radio access network; and
a transmitter configured to transmit the location information received from each terminal connected to the base station device to the communication management device.

5. A communication system comprising:
a first base station configured to provide a first cell;
a second base station configured to provide a second cell including the first cell; and
a communication management device configured to manage communication of a radio access network including the first base station and the second base station,
wherein the communication management device
connects a terminal connected to the first base station to the second base station and shifts an operation mode of the first base station from a normal mode to a power saving mode when traffic volumes of the first cell and the second cell become less than a predetermined threshold,
transmits, to the second base station, an instruction indicating acquisition of location information of a terminal connected to the second base station,
wherein the second base station
transmits, in response to the instruction, a second instruction indicating reporting of the location information to a terminal connected to the second base station, and
transmits the location information reported from the terminal to the communication management device, and
wherein the communication management device determines whether to return the operation mode of the first base station from the power saving mode to the normal mode based on a traffic volume of the second cell and the location information reported from the terminal via the second base station.

6. The communication system according to claim 5, wherein the communication management device transmits the instruction to the second base station via an O1 interface of an O-RAN architecture.

7. The communication system according to claim 5, wherein the second base station transmits the second instruction to a terminal connected to the second base station by using an RRC Connection Reconfiguration message.

8. The communication system according to claim 5, wherein the second base station transmits the location information reported from the terminal to the communication management device via an O1 interface of an O-RAN architecture.

9. A communication management method for controlling network energy saving of a radio access network including a first base station that provides a first cell, a second base station that provides a second cell including the first cell, and a communication management device that manages communication of the radio access network including the first and second base stations,
wherein the communication management device
connects a terminal connected to the first base station to the second base station and shifts an operation mode of the first base station from a normal mode to a network energy saving mode when traffic volumes of the first and second cells become less than a predetermined threshold,
transmits, to the second base station, an instruction indicating acquisition of location information of a terminal connected to the second base station,
wherein the second base station
transmits, in response to the instruction, a second instruction indicating reporting of the location information to a terminal connected to the second base station, and
transmits the location information reported from the terminal to the communication management device, and
wherein the communication management device determines whether to return the operation mode of the first base station from the network energy saving mode to the normal mode based on a traffic volume of the second cell and the location information reported from the terminal via the second base station.
